# EUROPEAN PATENT APPLICATION

(11) **EP 3 666 822 A1**
(43) Date of publication of application: **17.06.2020**
(21) Application number: 18844339.4
(22) Date of filing: 19.07.2018
(51) Int. Cl.: C08L 21/00, B60C 1/00, C08L 25/08, C08L 93/04

(54) **MODIFIER FOR TIRE RUBBER**

(30) Priority: 08.08.2017 JP 2017152847
(71) Applicant: Harima Chemicals, Incorporated, Kakogawa-shi, Hyogo 675-0019 (JP)
(72) Inventor: MATSUYOSHI, Katsuya, Kakogawa-shi Hyogo 675-0019 (JP); ABE, Hiroki, Kakogawa-shi Hyogo 675-0019 (JP); ZHOU, Lin, Kakogawa-shi Hyogo 675-0019 (JP)
(74) Representative: SSM Sandmair
(86) International application number: PCT/JP2018/027083
(87) International publication number: WO 2019/031185

(57) **Abstract**

A rubber modifier for tires for modifying a rubber for tires contains rosins, and a styrene-(meth)acryl copolymer that is a polymer of a monomer component containing a styrene monomer and a (meth)acryl monomer.

## Description

### TECHNICAL FIELD

The present invention relates to a rubber modifier for tires, to be specific, to a rubber modifier for tires added to a rubber composition for tires so as to modify a rubber for tires.

### BACKGROUND ART

It has been known that recently, in order to improve various properties such as low fuel consumption, mechanical strength, and gripping performance, a functional filler, a rubber modifier, or the like is added to a vehicle tire or the like.

To be more specific, for example, a rubber composition that is made by blending 0.1 to 30 parts by weight of rosin ester having a softening point of 100°C or less with respect to 100 parts by weight of at least one rubber material selected from the group consisting of natural rubber and synthetic rubber has been proposed (ref: for example, the following Patent Document 1).

### Citation List

### Patent Document

Patent Document 1: Japanese Unexamined Patent Publication No. HI0-287768

### SUMMARY OF THE INVENTION

### PROBLEM TO BE SOLVED BY THE INVENTION

As described in the above-described Patent Document 1, by adding the rosin ester as a rubber modifier to the rubber composition, the improvement of heat generation resistance (that is, reduction in rolling resistance) can be achieved.

Meanwhile, in the tire, a further reduction in the rolling resistance is demanded, and in addition, the improvement of wet gripping performance is demanded.

However, there is a disadvantage that the achievement in both of the reduction in the rolling resistance and the improvement of the wet gripping performance is difficult.

The present invention provides a rubber modifier for tires that is capable of obtaining a tire having excellent rolling resistance and excellent wet gripping performance.

### MEANS FOR SOLVING THE PROBLEM

The present invention [1] includes a rubber modifier for tires for modifying a rubber for tires containing rosins, and a styrene-(meth)acryl copolymer that is a polymer of a monomer component containing a styrene monomer and a (meth)acryl monomer.

The present invention [2] includes the rubber modifier for tires described in the above-described [1], wherein a weight average molecular weight of the styrene-(meth)acryl copolymer is 3000 or more and 35000 or less.

The present invention [3] includes the rubber modifier for tires described in the above-described [1] or [2], wherein an acid value is above 0 mgKOH/g and 25 mgKOH/g or less.

The present invention [4] includes the rubber modifier for tires described in any one of the above-described [1] to [3], wherein a softening point is 30°C or more and 100°C or less.

The present invention [5] includes the rubber modifier for tires described in any one of the above-described [1] to [4], wherein a content ratio of the styrene-(meth)acryl copolymer with respect to the total amount of the rosins and the styrene-(meth)acryl copolymer is 2 mass% or more and 20 mass% or less.

The present invention [6] includes the rubber modifier for tires described in any one of the above-described [1] to [5], wherein a content ratio of the styrene monomer with respect to the total amount of the monomer component is 50 mass% or more and 95 mass% or less.

### EFFECT OF THE INVENTION

The rubber modifier for tires of the present invention is capable of imparting excellent rolling resistance and excellent wet gripping performance to a tire produced from a rubber composition by being added to a rubber composition for tires.

That is, according to the rubber modifier for tires of the present invention, a tire having excellent rolling resistance and excellent wet gripping performance is capable of being obtained.

### DESCRIPTION OF EMBODIMENTS

A rubber modifier for tires of the present invention contains rosins and a styrene-(meth)acryl copolymer.

The rosins are obtained as a solid hydrocarbon secreted from a tree such as needle-leaved tree (for example, pine tree or the like), and contains a resin acid having a reactive double bond.

The resin acid is a compound having a carboxyl group derived from a tree, and to be specific, examples of the resin acid having a reactive double bond include abietic acid, palustric acid, neoabietic acid, and levopimaric acid.

These rosins are classified according to a presence or absence of modification, and to be specific, examples of the rosins include non-modified rosin (unmodified rosin) and rosin modified product (rosin derivative).

Examples of the non-modified rosin include tall rosin (also known as tall oil rosin), gum rosin, wood rosin, disproportionated rosin, polymerized rosin, hydrogenated rosin, and another chemically modified rosin.

These non-modified rosins can be used alone or in combination of two or more.

As the non-modified rosin, preferably, a tall rosin is used.

The rosin modified product is a modified product of the above-described non-modified rosin, and examples thereof include rosin esters, unsaturated carboxylic acid-modified rosins, unsaturated carboxylic acid-modified rosin esters, an amide compound of a rosin, and amine salt of a rosin.

The rosin esters can be, for example, obtained by allowing the above-described non-modified rosin to react with a polyhydric alcohol by a known esterification method.

Examples of the polyhydric alcohol include dihydric alcohols such as ethylene glycol, propylene glycol, neopentyl glycol, trimethylene glycol, tetramethylene glycol, 1,3-butanediol, and 1,6-hexanediol; trihydric alcohols such as glycerin, trimethylol propane, trimethylol ethane, and triethylol ethane; tetrahydric alcohols such as pentaerythritol and dipentaerythritol; and amino alcohols such as triethanolamine, tripropanolamine, triisopropanolamine, N-isobutyldiethanolamine, and N-n-butyl-diethanolamine. These polyhydric alcohols can be used alone or in combination of two or more.

As the mixing ratio of the non-modified rosin and the polyhydric alcohol, the mole ratio (OH/COOH) of a hydroxyl group of the polyhydric alcohol with respect to a carboxyl group of the non-modified rosin is, for example, 0.2 to 1.2. In the reaction of the non-modified rosin with the polyhydric alcohol, the reaction temperature is, for example, 150 to 300°C, and the reaction time is, for example, 2 to 30 hours. In the reaction, a known catalyst can be also blended at an appropriate ratio as needed.

The unsaturated carboxylic acid-modified rosins can be, for example, obtained by allowing α,β-unsaturated carboxylic acids to react with the above-described non-modified rosin by a known method.

Examples of the α,β-unsaturated carboxylic acids include α,β-unsaturated carboxylic acid and acid anhydride thereof. To be specific, examples thereof include fumaric acid, maleic acid, maleic anhydride, itaconic acid, citraconic acid, citraconic anhydride, acrylic acid, and methacrylic acid. These α,β-unsaturated carboxylic acids can be used alone or in combination of two or more.

As the mixing ratio of the non-modified rosin and the α,β-unsaturated carboxylic acids, the ratio of the α,β-unsaturated carboxylic acids with respect to 1 mol of the non-modified rosin is, for example, 1 mol or less. In the reaction of the non-modified rosin with the α,β-unsaturated carboxylic acids, the reaction temperature is, for example, 150 to 300°C, and the reaction time is, for example, 1 to 24 hours. In the reaction, a known catalyst can be also blended at an appropriate ratio as needed.

The unsaturated carboxylic acid-modified rosin esters can be, for example, obtained by allowing the above-described polyhydric alcohols and the above-described α,β-unsaturated carboxylic acids to sequentially or simultaneously react with the above-described non-modified rosin.

To sequentially react the above-described component, first, the non-modified rosin reacts with the polyhydric alcohol to then react with the α,β-unsaturated carboxylic acids, or first, the non-modified rosin reacts with the α,β-unsaturated carboxylic acids to then react with the polyhydric alcohol. The reaction conditions in the esterification reaction of the non-modified rosin with the polyhydric alcohol and the modification reaction of the non-modified rosin with the α,β-unsaturated carboxylic acids can be carried out as the same as the description above.

An amide compound of the rosin can be, for example, obtained by allowing the above-described non-modified rosin to react with an amidation agent.

Examples of the amidation agent include primary and/or secondary polyamine compound, polyoxazoline compound, and polyisocyanate compound.

The primary and/or secondary polyamine compound is a compound containing two or more primary and/or secondary amino groups in one molecule, and can amidate the rosin by condensation reaction with a carboxyl group contained in the non-modified rosin. To be specific, examples of the polyamine compound include chain diamines such as ethylenediamine, N-ethylaminoethylamine, 1,2-propanediamine, 1,3-propanediamine, N-methyl-1,3-propanediamine, bis(3-aminopropyl)ether, 1,2-bis(3-aminopropoxy)ethane, 1,3-bis(3-aminopropoxy)-2,2-dimethylpropane, 1,4-diaminobutane, and laurylaminopropylamine; cyclic diamines such as 2-aminomethylpiperidine, 4-aminomethylpiperidine, 1,3-di(4-piperidyl)-propane, and homopiperazine; polyamines such as diethylenetriamine, triethylenetetramine, iminobispropylamine, and methyliminobispropylamine; and furthermore, hydrohalogenic acid salt thereof.

These primary and/or secondary polyamine compounds can be used alone or in combination of two or more.

The polyoxazoline compound is a compound containing two or more polyoxazoline rings in one molecule, and can amidate the rosin by addition reaction with a carboxyl group contained in the non-modified rosin. An example of the polyoxazoline compound includes 2,2'-(1,3-phenylene)-bis(2-oxazoline).

These polyoxazoline compounds can be used alone or in combination of two or more.

The polyisocyanate compound is a compound having two or more isocyanate groups in one molecule, and can amidate the rosin by addition condensation decarboxylation reaction with a carboxyl group contained in the non-modified rosin. Examples of the polyisocyanate compound include aromatic diisocyanate (for example, tolylene diisocyanate (2,4- or 2,6-tolylene diisocyanate or a mixture thereof), phenylene diisocyanate (m-, p-phenylene diisocyanate or a mixture thereof), 1,5-naphthalene diisocyanate, diphenylmethane diisocyanate (4,4'-, 2,4'-, or 2,2'-diphenylmethane diisocyanate or a mixture thereof), 4,4'-toluidine diisocyanate, or the like); araliphatic diisocyanate (for example, xylylene diisocyanate (1,3- or 1,4-xylylene diisocyanate or a mixture thereof), tetramethylxylylene diisocyanate (1,3- or 1,4-tetramethylxylylene diisocyanate or a mixture thereof), or the like); aliphatic diisocyanate (for example, 1,3-trimethylene diisocyanate, 1,4-tetramethylene diisocyanate, 1,5-pentamethylene diisocyanate, 1,6-hexamethylene diisocyanate, or the like); alicyclic diisocyanate (for example, diisocyanate such as cyclohexane diisocyanate, 3-isocyanatomethyl-3,5,5-trimethylcyclohexyl isocyanate (isophorone diisocyanate), methylenebis(cyclohexyl isocyanate), norbornane diisocyanate, and bis(isocyanatomethyl)cyclohexane); and furthermore, a derivative thereof (for example, multimer, polyol adduct, or the like).

These polyisocyanate compounds can be used alone or in combination of two or more.

These amidation agents can be used alone or in combination of two or more.

As the mixing ratio of the non-modified rosin and the amidation agent, the mole ratio (OH/active group) of an active group (primary and/or secondary amino group, polyoxazoline ring, isocyanate group) of the amidation agent with respect to a carboxyl group of the non-modified rosin is, for example, 0.2 to 1.2. In the reaction of the non-modified rosin with the polyhydric alcohol, the reaction temperature is, for example, 120 to 300°C, and the reaction time is, for example, 2 to 30 hours. In the reaction, a known catalyst can be also blended at an appropriate ratio as needed.

The amine salt of the rosin can be obtained by neutralizing a carboxyl group contained in the non-modified rosin with a tertiary amine compound.

Examples of the tertiary amine compound include tri-C1-4 alkylamine such as trimethylamine and triethylamine and heterocyclic amine such as morpholine.

These tertiary amine compounds can be used alone or in combination of two or more.

Furthermore, examples of the rosin modified product include rosin modified phenols and rosin alcohols in which a carboxyl group of the rosins (non-modified rosin, unsaturated carboxylic acid-modified rosins, or the like) is subjected to reduction treatment.

These rosin modified products can be used alone or in combination of two or more.

As the rosin modified product, preferably, rosin esters are used.

These rosins can be used alone or in combination of two or more.

As the rosins, preferably, a modified product of the tall rosin is used, more preferably, rosin esters of the tall rosin are used.

Preferably, the rosins that do not have the excessively high carboxyl group content and have an appropriate acid value are used.

To be specific, the acid value of the rosins is usually above 0 mgKOH/g, and for example, 100 mgKOH/g or less, preferably 30 mgKOH/g or less, more preferably 10 mgKOH/g or less, further more preferably 9 mgKOH/g or less.

The acid value is measured in conformity with Examples to be described later (hereinafter, the same).

When the acid value is excessively high, the acid value can be also adjusted within the above-described range by reducing the carboxyl group of the rosins based on a known esterification treatment.

The styrene-(meth)acryl copolymer is a polymer of a monomer component containing a styrene monomer and a (meth)acryl monomer. The (meth)acryl is defined as acryl and/or methacryl.

Examples of the styrene monomer include styrene and a derivative thereof. To be specific, examples of the styrene monomer include aromatic vinyl monomers such as styrene (vinyl benzene), p-methyl styrene, o-methyl styrene, α-methyl styrene, and ethyl vinyl benzene.

These styrene monomers can be used alone or in combination of two or more.

As the styrene monomer, preferably, styrene is used.

The (meth)acryl monomer is a copolymerizable monomer having a (meth)acryl group, and examples thereof include methyl (meth)acrylate, ethyl (meth)acrylate, propyl (meth)acrylate, isopropyl (meth)acrylate, butyl (meth)acrylate, isobutyl (meth)acrylate, sec-butyl (meth)acrylate, t-butyl (meth)acrylate, pentyl (meth)acrylate, neopentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, isobornyl (meth)acrylate, and 2-hydroxyethyl (meth)acrylate.

These (meth)acryl monomers can be used alone or in combination of two or more. When the (meth)acryl monomers are used in combination of two or more, the combination ratio thereof is appropriately set in accordance with its purpose and use.

As the (meth)acryl monomer, preferably, an isobornyl (meth)acrylate is included, more preferably, a methyl (meth)acrylate, an ethyl (meth)acrylate, and an isobornyl (meth)acrylate are included.

The monomer component can contain a copolymerizable monomer that is copolymerizable with the styrene monomer and the (meth)acryl monomer in addition to the styrene monomer and the (meth)acryl monomer.

Examples of the copolymerizable monomer include unsaturated carboxylic acids such as (meth)acrylic acid, fumaric acid, maleic acid, itaconic acid, crotonic acid, and cinnamic acid; unsaturated dicarboxylic anhydrides such as fumaric anhydride, maleic anhydride, and itaconic anhydride; unsaturated dicarboxylic acid monoesters such as monomethyl itaconate, monobutyl itaconate, and 2-acryloyloxyethyl phthalate; unsaturated tricarboxylic acid monoesters such as 2-methacryloyl oxtyethyl trimellitic acid and 2-methacryloyl oxyethyl pyromellitic acid; sulfonyl group-containing vinyl monomers such as styrenesulfonic acid, isoprenesulfonic acid, vinylsulfonic acid, allylsulfonic acid, 2-(meth)acrylamide-2-methylpropanesulfonic acid, and a salt thereof; and diene monomers such as butadiene, isoprene, and chloroprene.

These copoylmerizable monomers can be used alone or in combination of two or more.

When the copolymerizable monomer is used, the copolymerizable monomer that does not contain the diene monomer is preferable.

The monomer component preferably does not contain the copolymerizable monomer, and consists of the styrene monomer and the (meth)acryl monomer.

As the content ratio of the styrene monomer and the (meth)acryl monomer, the ratio of the styrene monomer with respect to the total amount of the monomer component is, for example, 50 mass% or more, preferably above 50 mass%, more preferably 60 mass% or more, further more preferably 70 mass% or more, and for example, 95 mass% or less, preferably 90 mass% or less, more preferably 80 mass% or less. The ratio of the (meth)acryl monomer with respect to the total amount of the monomer component is, for example, 5 mass% or more, preferably 10 mass% or more, more preferably 20 mass% or more, and for example, 50 mass% or less, preferably below 50 mass%, more preferably 40 mass% or less, further more preferably 30 mass% or less.

When the content ratio of the styrene monomer and the (meth)acryl monomer is within the above-described range, a reduction of the rolling resistance and the improvement of the wet gripping performance can be achieved.

The styrene-(meth)acryl copolymer can be obtained by polymerizing the above-described monomer component by a known method.

To be specific, for example, the monomer component, a polymerization initiator, and a solvent are charged into a predetermined reaction vessel to be reacted. In this method, the reaction can be also progressed by adding a portion of or the entire polymerization initiator dropwise to the reaction vessel.

An example of the polymerization initiator includes a radical polymerization initiator. Preferably, a radical polymerization initiator other than an azo-based compound is used, and to be specific, a peroxide compound, sulfides, sulfines, and sulfinic acids are used. More preferably, a peroxide compound is used. The peroxide compound may be used as a redox polymerization initiator by being used with a reducing agent in combination.

Examples of the peroxide compound include an organic peroxide and an inorganic peroxide. Preferably, an inorganic peroxide is used.

Examples of the organic peroxide include benzoyl peroxide, lauroyl peroxide, acetyl peroxide, caprylyl peroxide, 2,4-dichlorobenzoyl peroxide, isobutyl peroxide, acetyl cyclohexyl sulfonyl peroxide, t-butyl peroxypivalate, t-butylperoxy-2-ethylhexanoate, 1,1-di-t-butylperoxycyclohexane, 1,1-di-t-butylperoxy-3,3,5-trimethylcyclohexane, 1,1-di-t-hexylperoxy-3,3,5-trimethylcyclohexane, isopropyl peroxydicarbonate, isobutyl peroxydicarbonate, s-butyl peroxydicarbonate, n-butyl peroxydicarbonate, 2-ethylhexyl peroxydicarbonate, bis(4-t-butylcyclohexyl) peroxydicarbonate, t-amylperoxy-2-ethylhexanoate, 1,1,3,3-tetramethylbutylperoxy-ethylhexanoate, 1,1,2-trimethylpropylperoxy-2-ethylhexanoate, t-butyl peroxy isopropyl monocarbonate, t-amyl peroxy isopropyl monocarbonate, t-butyl peroxy-2-ethylhexyl carbonate, t-butyl peroxy allyl carbonate, t-butyl peroxy isopropyl carbonate, 1,1,3,3-tetramethylbutyl peroxy isopropyl monocarbonate, 1,1,2-trimethylpropyl peroxy isopropyl monocarbonate, 1,1,3,3-tetramethylbutyl peroxy isononate, 1,1,2-trimethylpropyl peroxy isononate, and t-butyl peroxy benzoate.

Examples of the inorganic peroxide include persulfates such as sodium persulfate, potassium persulfate, and ammonium persulfate; hydrogen peroxide; potassium permanganate; bromates such as sodium bromate and potassium bromate; perborates such as sodium perborate, potassium perborate, and ammonium perborate; percarbonates such as sodium percarbonate, potassium percarbonate, and ammonium percarbonate; and perphosphates such as sodium perphosphate, potassium perphosphate, and ammonium perphosphate. Preferably, a persulfate is used, more preferably, a potassium persulfate and an ammonium persulfate are used, further more preferably, an ammonium persulfate is used.

These polymerization initiators can be used alone or in combination of two or more.

The mixing ratio of the polymerization initiator with respect to 100 parts by mass of the total amount of the monomer component is, for example, 1 part by mass or more, preferably 2 parts by mass or more, and for example, 10 parts by mass or less, preferably 7 parts by mass or less.

Examples of the solvent include water; ketone solvents such as acetone and methyl ethyl ketone; monohydric alcohol solvents such as methanol, ethanol, propanol, isopropanol, and butanol; glycol ether solvents such as ethylene glycol monoethyl ether and propylene glycol monomethyl ether; ester ether solvents such as propylene glycol monomethyl ether acetate; and hydrocarbon solvents such as cyclohexane, methylcyclohexane, toluene, and xylene. Preferably, a hydrocarbon solvent is used, more preferably, toluene is used.

These solvents can be used alone or in combination of two or more.

The mixing ratio of the solvent is not particularly limited, and is appropriately set in accordance with its purpose and use.

In this method, along with the monomer component, the polymerization initiator, and the solvent described above, furthermore, a cross-linking agent, a chain transfer agent, or the like can be appropriately blended.

Examples of the cross-linking agent include bifunctional cross-linking agents (for example, methylenebis (meth)acrylamide, ethylenebis (meth)acrylamide, divinylbenzene, allyl (meth)acrylamide, ethylene glycol di(meth)acrylate, diethylene glycol di(meth)acrylate, triethylene glycol di(meth)acrylate, allyl (meth)acrylate, or the like); polyfunctional cross-linking agents (for example, 1,3,5-triacryloyl hexahydro-S-triazine, triallyl isocyanurate, pentaerythritol triacrylate, trimethylol propane acrylate, diacryloylimide, or the like); and N-substituted acrylamide monomers (for example, N,N'-dimethylacrylamide, diacetone acrylamide, and isopropyl acrylamide). Preferably, a bifunctional cross-linking agent and an N-substituted acrylamide monomer are used, more preferably, methylenebis (meth)acrylamide and N,N'-dimethylacrylamide are used. These cross-linking agents can be used alone or in combination of two or more.

The mixing ratio of the cross-linking agent is appropriately set in accordance with its purpose and use.

Examples of the chain transfer agent include isopropyl alcohol, mercaptos (for example, mercapto ethanol, thiourea, thioglycolic acid, mercaptopropionic acid, thiosalycilic acid, thiolactic acid, aminoethanethiol, thioglycerol, thiomalic acid, or the like), and allyls (for example, allyl alcohol, sodium allylsulfonate, sodium methallylsulfonate, or the like).

These chain transfer agents can be used alone or in combination of two or more.

The mixing ratio of the chain transfer agent is appropriately set in accordance with its purpose and use.

The polymerization conditions differ in accordance with the kind of the monomer component, the polymerization initiator, the solvent, or the like. The polymerization temperature is, for example, 85°C or more, preferably 100°C or more. The polymerization time is, for example, 5 hours or more, preferably 7 hours or more.

By the polymerization reaction, the styrene-(meth)acryl copolymer can be obtained.

A weight average molecular weight (GPC measurement with standard polystyrene calibration) of the obtained styrene-(meth)acryl copolymer is, for example, 3000 or more, preferably 5000 or more, more preferably 7000 or more, and for example, 35000 or less, preferably 20000 or less, more preferably 13000 or less, further more preferably 10000 or less.

When the weight average molecular weight of the styrene-(meth)acryl copolymer is within the above-described range, a reduction in the rolling resistance and the improvement of the wet gripping performance can be achieved.

The weight average molecular weight is measured in conformity with Examples to be described later (hereinafter, the same).

The rosins and the styrene-(meth)acryl copolymer are mixed by a known method, so that a rubber modifier for tires can be obtained.

The mixing method is not particularly limited, and for example, a method in which the rosins and the styrene-(meth)acryl copolymer are mixed in a state of being dissolved is used. To be specific, a method in which the rosins and the styrene-(meth)acryl copolymer are dissolved in a known organic solvent, and a solution of the rosins and a solution of the styrene-(meth)acryl copolymer are mixed is used.

In the rubber modifier for tires, the content ratio of the rosins with respect to the total amount of the rosins and the styrene-(meth)acryl copolymer is, for example, 80 mass% or more, preferably 83 mass% or more, more preferably 88 mass% or more, further more preferably 93 mass% or more, and for example, 98 mass% or less, preferably 97 mass% or less, more preferably 96 mass% or less. The content ratio of the styrene-(meth)acryl copolymer with respect to the total amount of the rosins and the styrene-(meth)acryl copolymer is, for example, 2 mass% or more, preferably 3 mass% or more, more preferably 4 mass% or more, and for example, 20 mass% or less, preferably 17 mass% or less, more preferably 12 mass% or less, further more preferably 7 mass% or less.

When the content ratio of the styrene-(meth)acryl copolymer is within the above-described range, a reduction in the rolling resistance and the improvement of the wet gripping performance can be achieved.

The rubber modifier for tires can further contain another resin.

The other resin is a resin excluding the rosins and the styrene-(meth)acryl copolymer, and an example thereof includes a coumarone indene resin. These can be used alone or in combination of two or more. As the other resin, in view of achievement of a reduction in the softening point and improvement of dispersibility of the rubber modifier for tires, and improvement of the gripping performance of the tire, preferably, a coumarone indene resin is used.

The coumarone indene resin is a resin containing coumarone and indene as a material monomer component that constitutes a skeleton (main chain) of the resin. The material monomer component of the coumarone indene resin can contain, for example, a monomer such as styrene, α-methylstyrene, methyl indene, and vinyl toluene.

The coumarone indene resin is not particularly limited, and is produced by a known method.

An example of the coumarone indene resin includes a liquid coumarone indene resin.

A softening point of the liquid coumarone indene resin is, for example, -20°C or more, preferably -10°C or more, more preferably -5°C or more, and for example, 45°C or less, preferably 40°C or less, more preferably 35°C or less.

The rubber modifier for tires can contain a component other than the resin in addition to the resin component containing the rosins and the styrene-(meth)acryl copolymer (furthermore, another resin) described above.

Examples of the component other than the resin include known additives such as dispersant, vulcanization accelerator auxiliary, reinforcing agent, oxidation inhibitor, deterioration inhibitor, crack deterring agent, silane coupling agent, vulcanization retardant, vulcanization activator, plasticizer, softener, oil, antioxidant, and filler.

These components other than the resin can be used alone or in combination of two or more.

In the rubber modifier for tires, the content ratio of the component other than the resin is not particularly limited, as long as the excellent effect of the present invention is not damaged. The content ratio of the component other than the resin with respect to the total amount of the rubber modifier for tires is, for example, 20 mass% or less, preferably 10 mass% or less, more preferably 5 mass% or less, and usually 0 mass% or more.

In other words, in the rubber modifier for tires, in view of excellent achievement of the effect of the present invention, the content ratio of the resin component with respect to the total amount of the rubber modifier for tires is, for example, 80 mass% or more, preferably 90 mass% or more, more preferably 95 mass% or more, and usually 100 mass% or less.

In view of excellent achievement of the effect of the present invention, the content ratio of the rosins with respect to the total amount of the resin component is, for example, 70 mass% or more, preferably 75 mass% or more, more preferably 80 mass% or more, and for example, 98 mass% or less, preferably 97 mass% or less, more preferably 96 mass% or less.

In view of excellent achievement of the effect of the present invention, the content ratio of the styrene-(meth)acryl copolymer with respect to the total amount of the resin component is, for example, 2 mass% or more, preferably 3 mass% or more, more preferably 4 mass% or more, and for example, 20 mass% or less, preferably 17 mass% or less, more preferably 12 mass% or less, further more preferably 7 mass% or less.

In view of excellent achievement of the effect of the present invention, the total sum of the content ratio of the rosins and the styrene-(meth)acryl copolymer with respect to the total amount of the resin component is, for example, 70 mass% or more, preferably 75 mass% or more, more preferably 80 mass% or more, further more preferably 85 mass% or more, and usually 100 mass% or less, preferably 95 mass% or less.

In view of excellent achievement of the effect of the present invention, the content ratio of the other resin (preferably, coumarone indene resin) with respect to the total amount of the resin component is, for example, 0 mass% or more, preferably 3 mass% or more, more preferably 5 mass% or more, and for example, 25 mass% or less, preferably 15 mass% or less.

Preferably, the rubber modifier for tires that does not have the excessively high carboxyl group content and has an appropriate acid value is used.

To be specific, the acid value of the rubber modifier for tires is, for example, above 0 mgKOH/g, preferably 2 mgKOH/g or more, more preferably 5 mgKOH/g or more, further more preferably 7 mgKOH/g or more, even more preferably 9 mgKOH/g or more, and for example, 30 mgKOH/g or less, preferably 25 mgKOH/g or less, more preferably 20 mgKOH/g or less, further more preferably 15 mgKOH/g or less, even more preferably 12 mgKOH/g or less.

When the acid value of the rubber modifier for tires is within the above-described range, a reduction in the rolling resistance and the improvement of the wet gripping performance can be achieved.

The acid value of the rubber modifier for tires is preferably derived from only the acid value of the rosins.

When the acid value is excessively high, the acid value can be also adjusted within the above-described range by reducing the carboxyl group of the rubber modifier for tires based on a known esterification treatment.

A softening point of the rubber modifier for tires (softening point of the resin component in the rubber modifier for tires) is, for example, 30°C or more, preferably 40°C or more, more preferably 60°C or more, further more preferably 65°C or more, and for example, 130°C or less, preferably 120°C or less, more preferably 100°C or less, further more preferably 90°C or less, particularly preferably 80°C or less.

When the softening point is within the above-described range, a reduction in the rolling resistance and the improvement of the wet gripping performance can be achieved.

The softening point is a temperature at which a ball descends by measurement with a ring and ball softening point measurement device by a method specified in JIS K 6220-1 (in 2001).

By being added to a rubber composition for tires, the rubber modifier for tires can impart excellent rolling resistance and excellent wet gripping performance to the tire produced from the rubber composition.

That is, according to the above-described rubber modifier for tires, a tire having excellent rolling resistance and excellent wet gripping performance can be obtained.

To be more specific, the above-described rubber modifier for tires is added to the rubber component for tires, and in this way, a rubber composition for tires is prepared.

In other words, the rubber composition for tires contains the above-described rubber modifier for tires and a rubber component.

The rubber component is not particularly limited, and an example thereof includes a diene rubber.

The diene rubber is not particularly limited, and examples thereof include natural rubber (NR), styrene butadiene rubber (SBR), butadiene rubber (BR), isoprene rubber (IR), butyl rubber (IIR), acrylonitrile butadiene rubber (NBR), ethylene propylene diene rubber (EPDM), and chloroprene rubber (CR).

These rubber components can be used alone or in combination of two or more.

In view of improvement of the strength and the abrasion resistance of a molded article to be obtained, as the rubber component, preferably, a natural rubber (NR), a styrene butadiene rubber (SBR), and a butadiene rubber (BR) are used, more preferably, a styrene butadiene rubber (SBR) and a butadiene rubber (BR) are used in combination.

When the styrene butadiene rubber (SBR) and the butadiene rubber (BR) are used in combination, the combination ratio of the styrene butadiene rubber (SBR) with respect to 100 parts by mass of the total amount of the styrene butadiene rubber (SBR) and the butadiene rubber (BR) is, for example, 40 parts by mass or more, preferably 60 parts by mass or more, and for example, 95 parts by mass or less, preferably 85 parts by mass or less. The combination ratio of the butadiene rubber (BR) with respect to 100 parts by mass of the total amount of the styrene butadiene rubber (SBR) and the butadiene rubber (BR) is, for example, 5 parts by mass or more, preferably 15 parts by mass or more, and for example, 60 parts by mass or less, preferably 40 parts by mass or less.

When the combination ratio of the styrene butadiene rubber (SBR) and the butadiene rubber (BR) is within the above-described range, the improvement of the strength and the abrasion resistance of the molded article to be obtained can be achieved.

In the rubber composition for tires, the mixing ratio of the rubber modifier for tires and the rubber component is appropriately set in accordance with its purpose and use, and the mixing ratio of the rubber modifier for tires with respect to 100 parts by mass of the rubber component is, for example, 0.1 parts by mass or more, preferably 1 part by mass or more, more preferably 3 parts by mass or more, further more preferably 5 parts by mass or more, even more preferably 10 parts by mass or more, particularly preferably 15 parts by mass or more, and for example, 50 parts by mass or less, preferably 40 parts by mass or less, more preferably 30 parts by mass or less.

The rubber composition for tires can contain a filler.

Examples of the filler include inorganic fillers such as calcium carbonate, magnesium carbonate, silicate and salts thereof, silica, clay, talc, mica powder, bentonite, alumina, aluminum silicate, carbon (acetylene black or the like), and aluminum powder and organic fillers such as cork. These can be used alone or in combination of two or more.

When the filler is blended, the mixing ratio thereof is appropriately set in accordance with its purpose and use.

The rubber composition for tires preferably contains a vulcanizing agent.

An example of the vulcanizing agent includes sulfur.

The sulfur is not particularly limited, and examples thereof include powdered sulfur, precipitated sulfur, colloidal sulfur, insoluble sulfur, and highly dispersible sulfur.

These vulcanizing agents can be used alone or in combination of two or more.

The mixing ratio of the vulcanizing agent with respect to 100 parts by mass of the rubber component is, for example, 0.5 parts by mass or more, preferably 1 part by mass or more, and for example, 5 parts by mass or less, preferably 3 parts by mass or less.

The rubber composition for tires preferably contains a vulcanizing accelerator.

Examples of the vulcanizing accelerator include zinc oxide, stearic acid, furthermore, sulfenamide-based vulcanizing accelerator [N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), N,N-diisopropyl-2-benzothiazole sulfenamide, or the like], and guanidine-based vulcanizing accelerator (diphenylguanidine (DBG), diorthotriguanidine, triphenylguanidine, orthotolylbiguanide, and diphenylguanidinephthalate).

These vulcanizing accelerators can be used alone or in combination of two or more.

The mixing ratio of the vulcanizing accelerator is appropriately set in accordance with its purpose and use.

Furthermore, various known additives can be blended in the rubber composition for tires at an appropriate ratio as needed. Examples thereof include deterioration inhibitor (for example, antiozonant, thermal deterioration inhibitor, oxidation deterioration inhibitor), crack inhibitor, silane coupling agent, vulcanizing accelerator, furthermore, vulcanizing auxiliary, vulcanizing retardant, vulcanizing activator, plasticizer, softener (treated distilled aromatic extracts (TDAE) or the like), and antioxidant.

These additives may be, for example, blended into at least any one of the above-described components in advance, or may be simultaneously blended at the time of the mixing thereof.

The rubber composition for tires can be obtained by mixing the above-described each of the components.

The mixing method is not particularly limited, and for example, a known rubber kneading machine such as roller, Banbury mixer, and kneader can be used. The mixing conditions are not particularly limited, and are appropriately set in accordance with a device to be used or the like.

The rubber composition for tires contains the above-described rubber modifier for tires, so that a tire having excellent rolling resistance and excellent wet gripping performance can be obtained.

The above-described rubber composition for tires is used in the production of a tire.

The method for producing a tire by using the above-described rubber composition for tires is not particularly limited, and a known vulcanizing molding method can be used.

That is, for example, the rubber composition for tires in an unvulcanized state is extruded and processed in accordance with the shape of the tire to be attached to a member of another tire member (for example, side wall portion, shoulder portion, bead portion, inner liner, or the like) on a tire molding machine, so that an unvulcanized tire is formed. Next, the unvulcanized tire is heated and pressed in a vulcanizer to be vulcanized.

The tire thus obtained contains the above-described rubber modifier for tires, so that the rolling resistance and the wet gripping performance are excellent.

Thus, the tire thus obtained can be preferably used as, for example, a tire for various vehicles such as automobiles, two-wheeled vehicles, and railway vehicles (for example, monorails or the like) and for example, a tire for aircrafts.

### Examples

Next, the present invention is described based on Examples and Comparative Example. The present invention is however not limited by the following Examples. All designations of "part" or "parts" and "%" mean part or parts by mass and % by mass, respectively, unless otherwise particularly specified in the following description. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS".

The details of the measurement method used in Production Examples, Examples, and Comparative Example are described in the following.

### <Measurement of Weight Average Molecular Weight (Mw) with Gel Permeation Chromatography>

A sample was dissolved in tetrahydrofuran to be measured with gel permeation chromatograph (GPC) equipped with a refractive index detector (RID) with the sample concentration as 5.0 g/L, thereby obtaining a molecular weight distribution of the sample.

Thereafter, the weight average molecular weight (Mw) of the sample was calculated from the obtained chromatogram (chart) with the standard polystyrene as a calibration curve. The measurement device and the measurement conditions are shown below.
Data processing apparatus: part number: "GPC-101" (manufactured by SHOWA DENKO K.K.)
Refractive index detector: RI detector built in part number: "GPC-101"
Column: two pieces of part number: "KF-803", "KF-802", and "KF-801" (manufactured by SHOWA DENKO K.K.)
Mobile phase: tetrahydrofuran
Column flow rate: 1.0 mL/min
Sample concentration: 5.0 g/L
Injection amount: 100 µL
Measurement temperature: 40°C
Molecular weight marker: standard polystyrene (SHODEX STANDARD, reference material manufactured by SHOWA DENKO K.K.)

### <Acid Value (mgKOH/g)>

In conformity with JIS K 5902 (in 2006), 0.5 to 0.7 g of sample was weighed in a 100 ml meyer with a chemical balance and shook well until being completely dissolved in a neutral solvent (toluene/methanol = 2:1), and thereafter, about 5 drops of 1% phenolphthalein was added thereto to be titrated with N/5KOH, thereby obtaining an acid value.

The end point of the titration was defined as the point at which the measurement liquid became slightly red, and didn't disappear within 30 seconds.

### <Softening Point (°C)>

The softening point was defined as a temperature at which a ball descended by measurement with a ring and ball softening point measurement device by a method specified in JIS K 6220-1 (in 2001).

### <Production of Styrene-(Meth)Acryl Copolymer>

### Production Example 1

A flask equipped with a stirrer, a condenser, a thermometer, an inert gas introducing pipe, and a dropping funnel was charged with 100 parts of toluene as a solvent, and an inert gas (nitrogen gas) was introduced thereto to increase the temperature thereof at 100°C.

Thereafter, as a monomer component, 75 parts (79 mol%) of styrene, 10 parts (5 mol%) of isobornyl methacrylate, 10 parts (11 mol%) of methyl methacrylate, and 5 parts (5 mol%) of ethyl methacrylate were charged into a dropping funnel, while being stirred.

Furthermore, as a polymerization initiator, 2 parts of t-butylperoxy-2-ethyl hexanate was added to the monomer component to be added dropwise over 2 hours.

After the completion of the dropping, 0.3 parts of polymerization initiator was appropriately added in a few times to be reacted at the same temperature for 5 hours.

In this manner, a toluene solution (50 mass%) of a styrene-(meth)acryl copolymer 1 was obtained.

The weight average molecular weight of the styrene-(meth)acryl copolymer 1 was 31455.

The acid value of the styrene-(meth)acryl copolymer 1 was 0 mgKOH/g.

### Production Example 2

A toluene solution (50 mass%) of a styrene-(meth)acryl copolymer 2 was obtained in the same manner as that of Production Example 1, except that the reaction temperature was changed to 105°C, and the amount of the polymerization initiator that was first added dropwise was changed to 3 parts with respect to Production Example 1.

The weight average molecular weight of the styrene-(meth)acryl copolymer 2 was 13901.

The acid value of the styrene-(meth)acryl copolymer 2 was 0 mgKOH/g.

### Production Example 3

A toluene solution (50 mass%) of a styrene-(meth)acryl copolymer 3 was obtained in the same manner as that of Production Example 1, except that the reaction temperature was changed to 108°C, and the amount of the polymerization initiator that was first added dropwise was changed to 5.5 parts with respect to Production Example 1.

The weight average molecular weight of the styrene-(meth)acryl copolymer 3 was 8607.

The acid value of the styrene-(meth)acryl copolymer 3 was 0 mgKOH/g.

### <Rubber Modifier for Tires>

### Example 1

A reaction device equipped with a stirring device, a cooler, a thermometer, and a nitrogen introducing pipe was charged with 85 parts of tall rosin (unmodified rosin, product name: HARTALL R-WW, manufactured by Harima Chemicals Group, Inc.) to be dissolved at 180°C.

Next, 9.2 parts of glycerin was added to the tall rosin and gradually heated until 260°C of the system under the stream of nitrogen gas to be reacted at the same temperature for 4 hours, so that the tall rosin was ester-modified by the glycerin. In this manner, 90.3 parts by mass of the rosins containing an ester modified product of the tall rosin (rosin esters) were obtained.

Thereafter, the system was gradually cooled to be retained at 180°C, and 30 parts (that is, 15 parts by mass of the styrene-(meth)acryl copolymer 1 as the solid content) of the 50 mass% toluene solution of the styrene-(meth)acryl copolymer 1 of Production Example 1 was added dropwise to the obtained ester modified product of the tall rosin, and all the solvents were distilled off, while being mixed.

In this manner, the rubber modifier for tires containing the ester modified product of the tall rosin (rosin esters) and the styrene-(meth)acryl copolymer 1 was obtained.

The acid value of the rubber modifier for tires was 21.7 mgKOH/g, and the softening point thereof was 88°C.

### Example 2

A reaction device equipped with a stirring device, a cooler, a thermometer, and a nitrogen introducing pipe was charged with 90 parts of tall rosin (unmodified rosin, product name: HARTALL R-WW, manufactured by Harima Chemicals Group, Inc.) to be dissolved at 180°C.

Next, 9.7 parts of glycerin was added to the tall rosin and gradually heated until 260°C of the system under the stream of nitrogen gas to be reacted at the same temperature for 4 hours, so that the tall rosin was ester-modified by the glycerin. In this manner, 95.6 parts by mass of the rosins containing an ester modified product of the tall rosin (rosin esters) were obtained.

Thereafter, the system was gradually cooled to be retained at 180°C, and 20 parts (that is, 10 parts by mass of the styrene-(meth)acryl copolymer 2 as the solid content) of the 50 mass% toluene solution of the styrene-(meth)acryl copolymer 2 of Production Example 2 was added dropwise to the obtained ester modified product of the tall rosin, and all the solvents were distilled off, while being mixed.

In this manner, the rubber modifier for tires containing the ester modified product of the tall rosin (rosin esters) and the styrene-(meth)acryl copolymer 2 was obtained.

The acid value of the rubber modifier for tires was 19.1 mgKOH/g, and the softening point thereof was 85°C.

### Example 3

A reaction device equipped with a stirring device, a cooler, a thermometer, and a nitrogen introducing pipe was charged with 95 parts of tall rosin (unmodified rosin, product name: HARTALL R-WW, manufactured by Harima Chemicals Group, Inc.) to be dissolved at 180°C.

Next, 10.3 parts of glycerin was added to the tall rosin and gradually heated until 260°C of the system under the stream of nitrogen gas to be reacted at the same temperature for 4 hours, so that the tall rosin was ester-modified by the glycerin. In this manner, 100.9 parts by mass of the rosins containing an ester modified product of the tall rosin (rosin esters) were obtained.

Thereafter, the system was gradually cooled to be retained at 180°C, and 10 parts (that is, 5 parts by mass of the styrene-(meth)acryl copolymer 3 as the solid content) of the 50 mass% toluene solution of the styrene-(meth)acryl copolymer 3 of Production Example 3 was added dropwise to the obtained ester modified product of the tall rosin, and all the solvents were distilled off, while being mixed.

In this manner, the rubber modifier for tires containing the ester modified product of the tall rosin (rosin esters) and the styrene-(meth)acryl copolymer 3 was obtained.

The acid value of the rubber modifier for tires was 22.6 mgKOH/g, and the softening point thereof was 80°C.

### Example 4

A reaction device equipped with a stirring device, a cooler, a thermometer, and a nitrogen introducing pipe was charged with 95 parts of tall rosin (unmodified rosin, product name: HARTALL R-WW, manufactured by Harima Chemicals Group, Inc.) to be dissolved at 180°C.

Next, 10.3 parts of glycerin was added to the tall rosin and gradually heated until 260°C of the system under the stream of nitrogen gas to be reacted at the same temperature for 10 hours, so that the tall rosin was ester-modified by the glycerin. In this manner, 100.5 parts by mass of the rosins containing an ester modified product of the tall rosin (rosin esters) were obtained.

Thereafter, the system was gradually cooled to be retained at 180°C, and 10 parts (that is, 5 parts by mass of the styrene-(meth)acryl copolymer 3 as the solid content) of the 50 mass% toluene solution of the styrene-(meth)acryl copolymer 3 of Production Example 3 was added dropwise to the obtained ester modified product of the tall rosin, and all the solvents were distilled off, while being mixed.

In this manner, the rubber modifier for tires containing the ester modified product of the tall rosin (rosin esters) and the styrene-(meth)acryl copolymer 3 was obtained.

The acid value of the rubber modifier for tires was 9.8 mgKOH/g, and the softening point thereof was 86°C.

### Example 5

A reaction device equipped with a stirring device, a cooler, a thermometer, and a nitrogen introducing pipe was charged with 97.5 parts of tall rosin (unmodified rosin, product name: HARTALL R-WW, manufactured by Harima Chemicals Group, Inc.) to be dissolved at 180°C.

Next, 10.6 parts of glycerin was added to the tall rosin and gradually heated until 260°C of the system under the stream of nitrogen gas to be reacted at the same temperature for 4 hours, so that the tall rosin was ester-modified by the glycerin. In this manner, 103.5 parts by mass of the rosins containing an ester modified product of the tall rosin (rosin esters) were obtained.

Thereafter, the system was gradually cooled to be retained at 180°C, and 5 parts (that is, 2.5 parts by mass of the styrene-(meth)acryl copolymer 3 as the solid content) of the 50 mass% toluene solution of the styrene-(meth)acryl copolymer 3 of Production Example 3 was added dropwise to the obtained ester modified product of the tall rosin, and all the solvents were distilled off, while being mixed.

In this manner, the rubber modifier for tires containing the ester modified product of the tall rosin (rosin esters) and the styrene-(meth)acryl copolymer 3 was obtained.

The acid value of the rubber modifier for tires was 20.3 mgKOH/g, and the softening point thereof was 78°C.

### Example 6

A reaction device equipped with a stirring device, a cooler, a thermometer, and a nitrogen introducing pipe was charged with 95 parts of tall rosin (unmodified rosin, product name: HARTALL R-WW, manufactured by Harima Chemicals Group, Inc.) to be dissolved at 180°C.

Next, 10.3 parts of glycerin was added to the tall rosin and gradually heated until 260°C of the system under the stream of nitrogen gas to be reacted at the same temperature for 10 hours, so that the tall rosin was ester-modified by the glycerin. In this manner, 100.5 parts by mass of the rosins containing an ester modified product of the tall rosin (rosin esters) were obtained.

Thereafter, the system was gradually cooled to be retained at 180°C, and 10 parts (that is, 5 parts by mass of the styrene-(meth)acryl copolymer 3 as the solid content) of the 50 mass% toluene solution of the styrene-(meth)acryl copolymer 3 of Production Example 3 was added dropwise to the obtained ester modified product of the tall rosin, and all the solvents were distilled off, while being mixed.

Then, 10 parts of coumarone indene resin (liquid coumarone indene resin, trade name: NOVARES C10, manufactured by Rutgers Chemicals) was added to 90 parts of obtained mixture to be dissolved at 200°C to be then further mixed.

In this manner, the rubber modifier for tires containing the ester modified product of the tall rosin (rosin esters), the styrene-(meth)acryl copolymer 3, and the coumarone indene resin was obtained.

The acid value of the rubber modifier for tires was 8.5 mgKOH/g, and the softening point thereof was 72°C.

### Comparative Example 1

A rosin ester (trade name: HARIESTER TF (rosin-modified glycerin ester (softening point: 80°C, acid value: 7.8 mgKOH/g, weight average molecular weight: 1000))) was prepared without using the styrene-(meth)acryl copolymer. This was defined as the rubber modifier for tires.

### <<Evaluation>>

### <Production of Evaluation Sample>

A material A shown in the following was kneaded under the conditions of 150°C of the preset temperature for 5 minutes by using a 1.7L Banbury mixer (manufactured by Kobe Steel, Ltd.), so that a kneaded product was obtained.

Next, a material B shown in the following was added to the obtained kneaded product to be kneaded under the conditions of 80°C for 5 minutes by using an open roll, so that an unvulcanized rubber composition was obtained.

Thereafter, the obtained unvulcanized rubber composition was molded into a sheet shape to be press-vulcanized under the conditions of 170°C for 10 minutes, so that a molded article having a thickness of 2 mm was obtained.

By using the obtained molded article, the evaluation was carried out by the following method. The results are shown in Table 2.

### <Material A>

80 parts by mass of styrene butadiene rubber (trade name: NS616 (non-oil extended SBR, styrene amount: 20 mass%, vinyl amount: 66 mass%, Tg: -23°C, Mw: 240,000), manufactured by Zeon Corporation)
20 parts by mass of polybutadiene rubber (trade name: CB25 (rare earth-based BR synthesized by using a Nd catalyst, Tg: -110°C), manufactured by Lanxess)
75 parts by mass of silica (trade name: Ultrasil VN3, manufactured by Degussa AG)
5 parts by mass of carbon black (trade name: Show Black N220, manufactured by Cabot Corporation)
8 parts by mass of silane coupling agent (Si 75 (bis(3-triethoxysilylpropyl) disulfide), manufactured by Degussa AG)
1.5 parts by mass of paraffin wax (trade name: Ozoace 0355, manufactured by NIPPON SEIRO CO., LTD.)
2 parts by mass of stearic acid (trade name: TSUBAKI, manufactured by NOF CORPORATION)
20 parts by mass of aromatic process oil (trade name: Diana Process Oil AH-24, manufactured by Idemitsu Kosan Co., Ltd.)
2.5 parts by mass of oxidation inhibitor (trade name: ANTIGEN 6C, manufactured by Sumitomo Chemical Co., Ltd.)
2 parts by mass of zinc oxide (zinc oxide II, manufactured by Mitsui Mining & Smelting Co., Ltd.)
20 parts by mass of rubber modifier for tires obtained in Examples and Comparative Example

### <Material B>

1.5 parts by mass of powdered sulfur (trade name: HK-200-5 (5 mass% oil-containing powdered sulfur), manufactured by Hosoi Chemical Industry Co., Ltd.)
1.3 parts by mass of vulcanizing accelerator (trade name: NOCCELER NS (N-tert-butyl-2-benzothiazolyl sulfenamide), manufactured by OUCHI SHINKO CHEMICAL INDUSTRIAL CO., LTD)
2.5 parts by mass of vulcanizing accelerator (trade name: NOCCELER D (1,3-diphenylguanidine), manufactured by OUCHI SHINKO CHEMICAL INDUSTRIAL CO., LTD)

### <1. tanδ>

By using a visco-elastic spectrometer VES (manufactured by Iwamoto Seisakusho), the loss tangent tanδ was measured under the conditions of frequency of 10 Hz, initial strain of 10%, and dynamic strain of 2% at a temperature of 0°C and 50°C.

In Examples 1 to 6, the index was displayed with the value of tan8 at 0°C and 50°C of Comparative Example 1 as 100.

The tanδ at 0°C shows that the larger the index value is, the more excellent the wet gripping performance is.

The tanδ at 50°C shows that the smaller the index value is, the smaller the rolling resistance is.

### [Table 1]

**Table 1**

| No. | | | | Ex. 1 | Ex. 2 | Ex. 3 | Ex. 4 | Ex. 5 |
|---|---|---|---|---|---|---|---|---|
| Charged Amount | Rosins (Rosin Esters) | Tall Rosin | (parts by mass) | 85 | 90 | 95 | 95 | 97.5 |
| | | Glycerin | (parts by mass) | 9.2 | 9.7 | 10.3 | 10.3 | 10.6 |
| | | Reaction Temperature | (°C) | 260 | 260 | 260 | 260 | 260 |
| | | Reaction Time | (hour) | 4 | 4 | 4 | 10 | 4 |
| | Styrene-(Meth)Acryl Copolymer | Production Ex. 1 (Mw: 31455) | (parts by mass) | 15 | - | - | - | - |
| | | Production Ex. 2 (Mw: 13901) | (parts by mass) | - | 10 | - | - | - |
| | | Production Ex. 3 (Mw: 8607) | (parts by mass) | - | - | 5 | 5 | 2.5 |

### [Table 2]

**Table 2**

| No. | | | | Ex. 1 | Ex. 2 | Ex. 3 | Ex. 4 | Ex.5 | Ex.6 | Comp.. Ex. 1 |
|---|---|---|---|---|---|---|---|---|---|---|
| Rubber Modifier for Tires | Softening Point (°C) | | | 88 | 85 | 80 | 86 | 78 | 72 | 80 |
| | Acid Value (mgKOH/g) | | | 21.7 | 19.1 | 22.6 | 9.8 | 20.3 | 8.5 | 7.8 |
| Evaluation | Low Fuel Consumption | 50°C tanδ value | | 93.3 | 86.7 | 86.7 | 86.7 | 93.3 | 76.7 | 100 |
| | Gripping Performance | 0°C tanδ value | | 100 | 101.4 | 101.4 | 105.6 | 102.8 | 108.5 | 100 |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### Industrial Applicability

The rubber modifier for tires of the present invention is, for example, used in a tire for various vehicles such as automobiles, two-wheeled vehicles, and railway vehicles (for example, monorails or the like) and for example, a tire for aircrafts.

## Claims

1. A rubber modifier for tires for modifying a rubber for tires comprising:
rosins, and
a styrene-(meth)acryl copolymer being a polymer of a monomer component containing a styrene monomer and a (meth)acryl monomer.

2. The rubber modifier for tires according to claim 1, wherein
a weight average molecular weight of the styrene-(meth)acryl copolymer is 3000 or more and 35000 or less.

3. The rubber modifier for tires according to claim 1, wherein
an acid value is above 0 mgKOH/g and 25 mgKOH/g or less.

4. The rubber modifier for tires according to claim 1, wherein
a softening point is 30°C or more and 100°C or less.

5. The rubber modifier for tires according to claim 1, wherein
a content ratio of the styrene-(meth)acryl copolymer with respect to the total amount of the rosins and the styrene-(meth)acryl copolymer is 2 mass% or more and 20 mass% or less.

6. The rubber modifier for tires according to claim 1, wherein
a content ratio of the styrene monomer with respect to the total amount of the monomer component is 50 mass% or more and 95 mass% or less.
